# EUROPEAN PATENT APPLICATION

(11) **EP 4 787 116 A1**
(43) Date of publication of application: **05.08.2026**
(21) Application number: 26154492.8
(22) Date of filing: 27.01.2026
(51) Int. Cl.: G06F 1/20, G06F 11/00, G06F 11/30

(54) **MANAGEMENT OF DYNAMIC POLLING RATES OF SENSORS**

(30) Priority: 28.01.2025 US 202563750417 P; 09.01.2026 US 202619445450
(71) Applicant: Vertiv Corporation, Westerville, OH 43082 (US)
(72) Inventor: KELLER, Matthew Griffith, Westerville, 43082 (US); SPATZ, Mark Andrew, Westerville, 43082 (US); VOIGT, Tyler William, Westerville, 43082 (US)
(74) Representative: Beal, James Michael

(57) **Abstract**

A thermal management system that is configured to dynamically change polling rates of wireless sensors within a data center environment over time is described. Sensors that provide temperature, humidity, and dew-point readings are then used to cause a ramp up or a ramp down of cooling equipment within a data center environment, such that the cooling equipment can be more reactive to the changing overall usage of computing resources within the data center environment. As computing power used by the computing resources fluctuates at non-static rates within a data center, the thermal management system adjusts polling rates of the sensors as production cycles ramp up or down, thus making the overall data center environment more efficient.

## Description

### CROSS-REFERENCE TO RELATED APPLICATIONS

This U.S. Non-Provisional Patent Application that claims the benefit of and priority to U.S. Provisional Patent Application No. 63/750,417, filed January 28, 2025, and to U.S. Non-Provisional Patent Application No. 19/445,450, filed 9 January 2026.

### TECHNICAL FIELD

This disclosure relates to a system for wireless optimized sensor polling.

### BACKGROUND

Wireless sensors, such as temperature sensors, typically have a static polling rate that does not capture quickly changing behaviors of a data center environment, due to the programmed nature of the wireless sensors. This fails to take into account external factors within a monitored area by the wireless sensor.

### SUMMARY

An aspect of the disclosed embodiment includes a system for managing polling rates of wireless sensors within a data center environment. For example, the system includes: a first set of sensors, configured to provide given sensor readings to a wireless gateway at a first polling rate; a second sensor, located proximate to cooling equipment, and configured to provide additional sensor readings to a computing device at a second polling rate; and the computing device, configured to: receive the given sensor readings from the wireless gateway; receive the additional sensor readings from the second sensor; execute an algorithm, using the given sensor readings and the additional sensor readings, wherein the execution of the algorithm comprises comparison of temperature, power, and time parameters; and output, based on results of the executed algorithm, updated polling rates of at least one of the first set of sensors or the second sensor, wherein one or more of the updated polling rates is different from at least one of the first polling rate or the second polling rate.

Another aspect of the disclosed embodiment includes a method for managing polling rates of wireless sensors within a data center environment. For example, the method includes: receiving given sensor readings from a wireless gateway at a first polling rate, wherein a first set of sensors that transmit the given sensor readings are located proximate to respective racks of computing hardware within a data center environment; receiving additional sensor readings from a second sensor at a second polling rate, wherein the second sensor that transmits the additional sensor readings is located proximate to cooling equipment within the data center environment; executing an algorithm, using the given sensor readings and the additional sensor readings, wherein the executing the algorithm comprises comparing temperature, power, and time parameters; and outputting, based on results of the executed algorithm, updated polling rates of at least one of the first set of sensors or the second sensor, wherein one or more of the updated polling rates is different from at least one of the first polling rate or the second polling rate.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 illustrates a data center environment in which wireless sensors at various locations within the data center environment transmit temperature, humidity, and/or dew-point sensor readings to a thermal management system via a wireless gateway, according to some embodiments.
FIG. 2A illustrates a series of time steps during implementation of a thermal management system that is configured for low thermal power and variable reporting, according to some embodiments.
FIG. 2B illustrates another moment in time during implementation of the thermal management system that is configured for learned behavior of high thermal power.
FIG. 3 is a flow diagram that illustrates a process of dynamically tuning polling rates of sensors within a data center environment, according to some embodiments.
FIG. 4 illustrates a plot over time in which, due to the implementation of the thermal management system, temperature and cooling power within the data center environment gradually decrease as a polling rate of wireless sensors within the data center environment dynamically increases, according to some embodiments.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including," "comprise," and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described herein in detail.

It may be understood that the example embodiments described herein may be considered in a descriptive sense only and not for purposes of limitation. Descriptions of features or aspects within each example embodiment may be considered as available for other similar features or aspects in other example embodiments.

The present disclosure pertains to implementing a thermal management system within a data center environment that is configured to dynamically control polling rates of wireless sensors.

Due to high performance computing (HPC) based resources within a given data center environment that scale up and down the use of power within a data center at variable rates, cooling systems of the data center should be able to react to those fluctuating power consumption rates without putting any of the computing resources at risk of overheating. By configuring a thermal management system to receive temperature sensor readings, humidity sensor readings, and dew-point sensor readings from sensors located at various physical locations that are proximate to those computing resources within the data center environment, the thermal management system can then determine whether or not polling rates of those sensors should dynamically increase, decrease, or remain the same, according to the recent and expected power consumption at the moment. Those polling rates may then change within a given 24-hour cycle, from day to night, or even across a year, according to some embodiments.

For example, as temperatures within the data center environment increase or decrease, that rate of change of temperature causes the polling rates of the sensors to need to be increased until such a time at which the temperature is stabilized again. This enables the cooling equipment within the data center environment to be more reactive when new high-power HPC loads are ramping up the overall usage of computing resources with the data center environment, or when due to some other sudden change, e.g., increase or decrease, in computing resource usage within the data center environment.

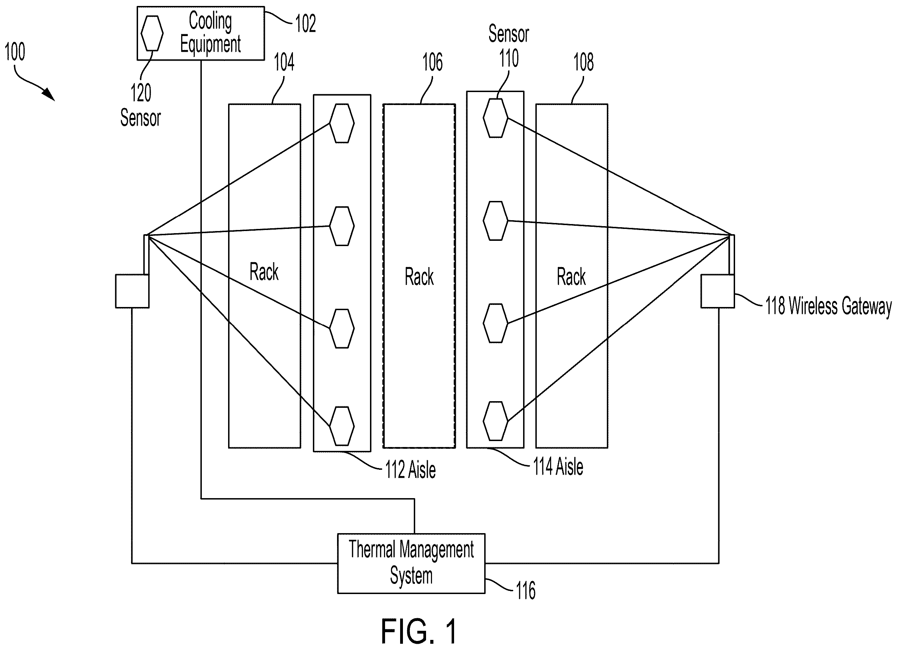

FIG. 1 illustrates a data center environment in which wireless sensors at various locations within the data center environment transmit temperature, humidity, and/or dew-point sensor readings to a thermal management system via a wireless gateway, according to some embodiments.

Data center environment 100 includes at least one rack of computing hardware, e.g., racks 104, 106, and 108, along with sensors, e.g., sensor 110, sensor 120, and the other illustrated sensors in the figure, that are configured to detect temperature, humidity, and dew-point sensor readings, or some combination thereof, of an environment that is proximate to a given set of computing hardware or other Information Technology (IT) equipment within the larger data center environment 100. The data center environment 100 also includes cooling equipment 102, and at least one sensor that is located proximate or within the packaging of the overall cooling equipment 102, e.g., sensor 120.

As shown in FIG. 1, the sensor 110, and other illustrated sensors in the figure that are proximate to the racks 104, 106, and 108, are connected to a wireless gateway 118, which may then provide temperature, humidity, and dew-point sensor readings from the sensors to an Application Programming Interface (API) of the thermal management system 116. In addition, sensor readings from the cooling equipment 102, e.g., temperature, humidity, and dew-point sensor readings from the sensor 120, may be provided directly to the thermal management system 116.

The thermal management system 116 includes a computing device that is configured to implement the thermal management system for the given data center environment 100 shown in the figure. The thermal management system 116 also includes algorithmic methods that, when executed on or across the computing device, causes the computing device to perform at least the following operations.

Sensor readings are provided to the thermal management system 116 via the wireless gateway 118. The algorithm that is executed using the computing device then determines if one or more of the sensors 110, 120, etc. has transmitted, or not, their sensor readings within an expected timeframe, e.g. wherein the expected timeframe corresponds to a current polling rate of that sensor. If the sensor(s) do not transmit their sensor readings within the expected timeframe, the computing device indicates that a wireless data packet collision has occurred. In response to this indication, the computing device is configured to adjust a polling rate of that particular sensor(s) accordingly. In addition, sensor readings from the cooling equipment 102 is also applied to the algorithmic methods, such that the computing device can determine that a higher level production cycle may be ramping up, for example. In that example, the computing device may output increased polling rates of the corresponding sensors, such that the cooling equipment 102 may be more reactive to the ramp up and overall increased usage of computing resources within at least one of the racks 104, 106, and 108. In a second example, the sensor readings from the cooling equipment 102 may indicate that production cycle is ramping down, and, in response, the computing device may output decreased polling rates of the corresponding sensors. The ramp down similarly indicates an overall decreased usage of computing resources within at least one of the racks 104, 106, and 108.

The above examples illustrate the dynamic way in which polling rates of wireless sensors within the data center environment 100 may be managed over time using the thermal management system 116.

As additionally shown in FIG. 1, sensors may be located in aisles 112 and 114, such that the sensors are accessible for maintenance, etc.

In some embodiments, the thermal management system 116 may be implemented for series of sensors associated with one or more of the following types of components of a data center environment: (1) a Data Center Infrastructure Management Solution (DCIM); (2) Rack Power Distribution Units (RPDUs); (3) a Remote Diagnostic Unit (RDU); and (4) sensors that monitor local temperature, humidity, dew-point, or some combination thereof. As used herein, an RDU may include any device to which various sensors and data center equipment are connected to, and which sends data to the DCIM.

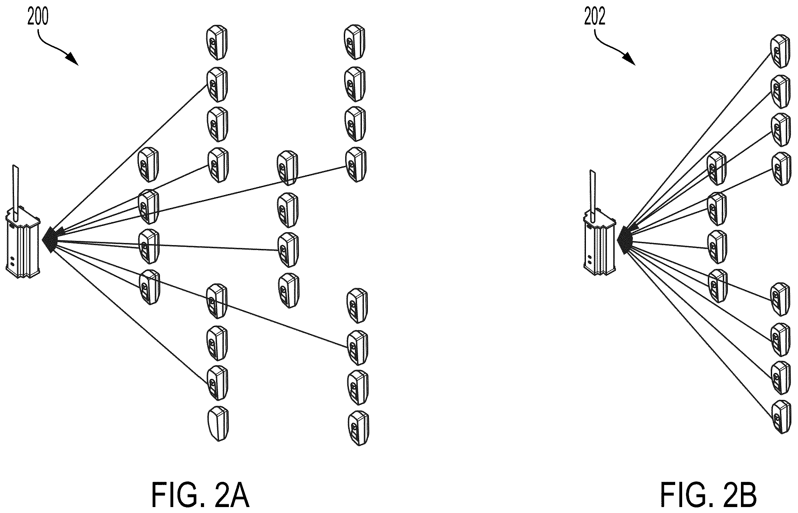

FIG. 2A illustrates a series of time steps during implementation of a thermal management system that is configured for low thermal power and variable reporting, and FIG. 2B illustrates another moment in time during implementation of the thermal management system that is configured for learned behavior of high thermal power.

Example 200 is meant to illustrate that the thermal management system 116 is configured to output updated polling rates for various sensors on an individualized basis. Depending, for example, on a given location of a given wireless sensor within the larger data center environment 100, a polling rate of that sensor may fluctuate at a higher rate than another wireless sensor that is located in a different location, and that exhibits a more stable rate of power usage.

As such, and as illustrated from left to right in example 200, a first four wireless sensors are configured, by the thermal management system, to have a first polling rate, and another eight wireless sensors are configured, by the thermal management system, to have a second polling rate. As further illustrated in FIG. 2A, the reception of temperature, humidity, and dew-point sensor readings, or some combination thereof, for the first four wireless sensors may be offset from the sensor readings from the other eight wireless sensors.

Example 202 illustrates a moment in time during which twelve sensors are brought back online (e.g., in a situation in which connectivity is lost and then restored), and thus transmit sensor readings to the wireless gateway at the same moment in time.

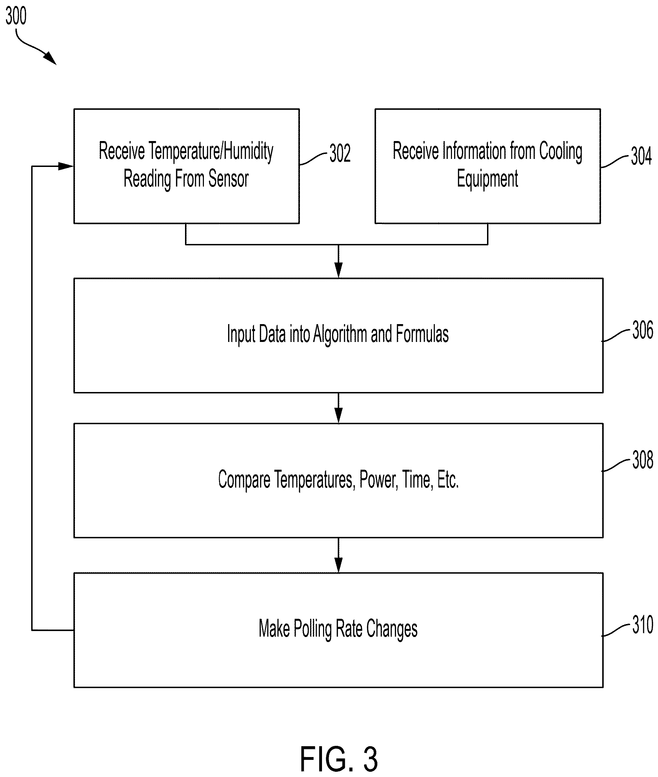

FIG. 3 is a flow diagram that illustrates a process of dynamically tuning polling rates of sensors within a data center environment, according to some embodiments.

As illustrated by process 300, a computing device that is configured to implement the thermal management system 116 is also configured to receive temperature, humidity, and dew-point sensor readings, or some combination thereof, from the physical environments that are proximate to the wireless sensors, or some combination thereof, in the given data center environment 100. Block 302 may be in response to the computing device polling the sensors themselves for such sensor readings, according to some embodiments.

In block 304, the computing device is also configured to receive sensor readings from cooling equipment within the data center environment. This may happen simultaneously or independently of receiving the temperature, humidity, and dew-point sensor readings from the sensors.

It should be understood that, as introduced above with regard to FIG. 1, the computing device is configured to receive the sensor readings from sensors located proximate to racks of computing hardware and the sensor readings from a sensor located proximate to the cooling equipment of blocks 302 and 304 via the wireless gateway 118, wherein the wireless gateway 118 is connected to the various sensors themselves. As illustrated in FIG. 1, there may be more than one total wireless gateway within the larger and overall data center environment 100.

In block 306, the sensor readings introduced in blocks 302 and 304 are provided to an algorithm that compares temperatures, power, and time parameters, also illustrated in block 308, and that subsequently outputs updated polling rates, also illustrated in block 310. The computing device is then configured to poll the sensors according to the updated polling rates, and process 300 then repeats for another iteration.

In some embodiments, the algorithm depicted in block 306 may refer to any type of algorithmic method, Artificial Intelligence (AI) model, or Machine Learning (ML) model that is configured to perform the operations described herein. In embodiments in which the algorithm is implemented using an ML model, the ML model may be trained using training datasets that allow the model to learn various adjustments to sensor polling rates that should be made under corresponding rates of power consumption within the data center environment.

Process 300 may additionally include fallback logic in situations in which connectivity is lost between the computing device implementing the thermal management system 116 and one or more components of the data center environment 100 that are responsible for providing temperature, humidity, or dew-point sensor readings, e.g., as illustrated in blocks 302 and 304. If connectivity is lost, default polling rates may be used until a moment in time at which point connectivity is restored. Default polling rates may refer to initial, static polling rates, e.g., polling rates within factory settings of the sensors, or to polling rates that reflect the last updated polling rates that were output from the algorithm, as illustrated in block 310.

Similarly, process 300 may additionally include logic that accounts for "staleness" of a given sensor. For example, if, after a given passage of time in which temperature, humidity, or dew-point sensor readings from a given sensor remain unchanged within a given bounded range that is monitored by the computing device, the computing device may be configured to fix a static polling rate for that particular sensor, until another later moment in time at which point the sensor readings begin to fluctuate outside of the given bounded range.

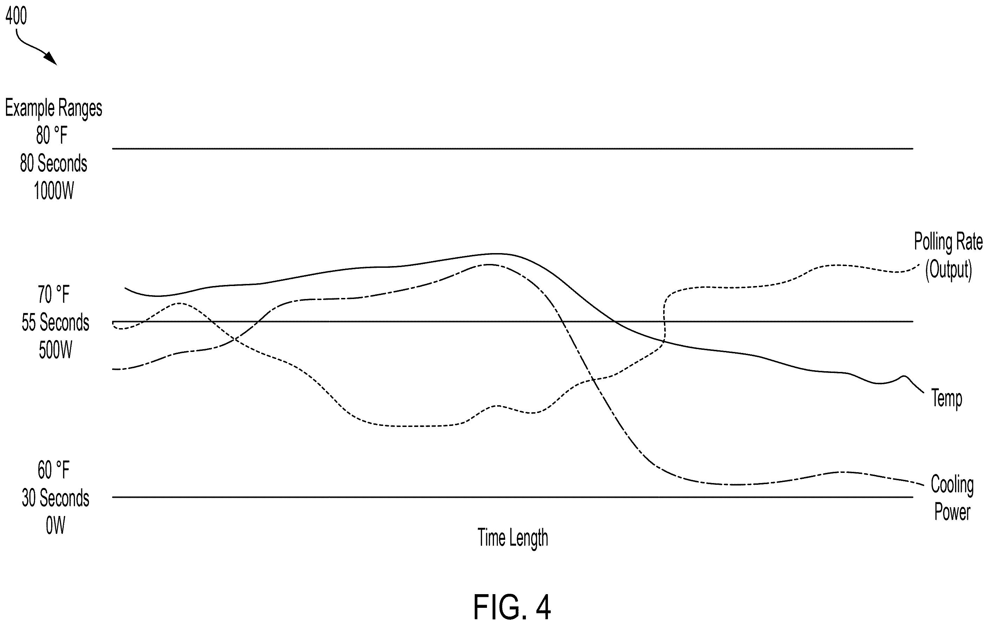

FIG. 4 illustrates a plot over time in which, due to the implementation of the thermal management system 116, temperature and cooling power within the data center environment 100 gradually decrease as a polling rate of the wireless sensors within the data center environment 100 dynamically increases, according to some embodiments.

As shown in FIG. 4, and moving through the passage of time indicated by the X axis in plot 400, the computing device that implements the thermal management system receives indications from the cooling equipment 102 of the given data center environment 100 that cooling power is increasing. This also corresponds to the increase in temperature, received via the sensor readings from sensors that are connected to the thermal management system 116 via the wireless gateway 118.

Cooling power and temperature then stay elevated and relatively constant for a given amount of time, during which the computing device is configured to decrease polling rates of the sensors, as also shown in FIG. 4.

Finally, as cooling power and temperature both begin to decrease and fluctuate outside of the relatively constant regime previously indicated, polling rates of the sensors increase.

Plot 400 illustrates how polling rates of sensors adapt to the rate of computing power that is currently being used within the data center environment 100. By dynamically adjusting polling rates, cooling equipment within the data center environment is thus more responsive to the changing rate of computing power, making the data center environment 100 more efficient overall.

While example embodiments have been described with reference to the figures, it will be understood by those of ordinary skill in the art that various changes in form and details may be made therein without departing from the scope as defined by the following claims.
The disclosure comprises the following items:
1. A system, comprising:
   a first set of sensors, configured to provide given sensor readings to a wireless gateway at a first polling rate;
   a second sensor, located proximate to cooling equipment, and configured to provide additional sensor readings to a computing device at a second polling rate; and
   the computing device, configured to:
      receive the given sensor readings from the wireless gateway;
      receive the additional sensor readings from the second sensor;
      execute an algorithm, using the given sensor readings and the additional sensor readings, wherein the execution of the algorithm comprises comparison of temperature, power, and time parameters; and
      output, based on results of the executed algorithm, updated polling rates of at least one of the first set of sensors or the second sensor, wherein one or more of the updated polling rates is different from at least one of the first polling rate or the second polling rate.
2. The system of item 1, wherein the computing device is further configured to:
   determine that a given one of the first set of sensors or the second sensor has not transmitted a corresponding sensor reading within an expected timeframe;
   provide an indication that a wireless data packet collision has occurred; and
   adjust a corresponding polling rate of the given one of the first set of sensors or the second sensor.
3. The system of item 1 or item 2, wherein the computing device is further configured to:
   determine that a given one of the first set of sensors or the second sensor has transmitted corresponding sensor readings that are within a given bounded range for a given passage of time; and
   adjust a corresponding polling rate of the given one of the first set of sensors or the second sensor to a static polling rate.
4. The system of any preceding item, wherein the given sensor readings or the additional sensor readings comprise temperature readings.
5. The system of any preceding item, wherein the given sensor readings or the additional sensor readings comprise humidity readings.
6. The system of any preceding item, wherein the given sensor readings or the additional sensor readings comprise dew-point readings.
7. The system of any preceding item, wherein the first set of sensors are located proximate to respective racks of computing hardware within a data center environment.
8. A method, comprising:
   receiving given sensor readings from a wireless gateway at a first polling rate, wherein a first set of sensors that transmit the given sensor readings are located proximate to respective racks of computing hardware within a data center environment;
   receiving additional sensor readings from a second sensor at a second polling rate, wherein the second sensor that transmits the additional sensor readings is located proximate to cooling equipment within the data center environment;
   executing an algorithm, using the given sensor readings and the additional sensor readings, wherein the executing the algorithm comprises comparing temperature, power, and time parameters; and
   outputting, based on results of the executed algorithm, updated polling rates of at least one of the first set of sensors or the second sensor, wherein one or more of the updated polling rates is different from at least one of the first polling rate or the second polling rate.
9. The method of item 8, further comprising:
   determining that a given one of the first set of sensors or the second sensor has not transmitted a corresponding sensor reading within an expected timeframe; and
   providing an indication that a wireless data packet collision has occurred.
10. The method of item 8 or item 9, further comprising:
   determining that a given one of the first set of sensors or the second sensor has transmitted corresponding sensor readings that are within a given bounded range for a given passage of time; and
   adjusting a corresponding polling rate of the given one of the first set of sensors or the second sensor to a static polling rate.
11. The method of any of items 8-10, wherein the given sensor readings or the additional sensor readings comprise temperature readings.
12. The method of any of items 8-11, wherein the given sensor readings or the additional sensor readings comprise humidity readings.
13. The method of any of items 8-12, wherein the given sensor readings or the additional sensor readings comprise dew-point readings.
14. A system, comprising:
   sensors, configured to provide sensor readings to a wireless gateway at a first polling rate; and
   a computing device, configured to:
      receive the sensor readings from the wireless gateway;
      execute an algorithm, using the sensor readings, wherein the execution of the algorithm comprises comparison of temperature, power, and time parameters; and
      output, based on results of the executed algorithm, updated polling rates of the sensors, wherein one or more of the updated polling rates is different from the first polling rate.
15. The system of item 14, wherein the system further comprises another sensor, located proximate to cooling equipment, and configured to provide additional sensor readings to the computing device at a second polling rate.
16. The system of item 14 or item 15, wherein the computing device is further configured to:
   receive the additional sensor readings; and
   execute the algorithm, using the sensor readings received from the wireless gateway and the additional sensor readings received from the other sensor.
17. The system of any of items 14-16, wherein the computing device is further configured to output, based on the results of the executed algorithm, another updated polling rate of the other sensor, wherein the other updated polling rate is different from the second polling rate.
18. The system of any of items 14-17, wherein the sensor readings comprise temperature readings.
19. The system of any of items 14-18, wherein the sensor readings comprise humidity readings.
20. The system of any of items 14-19, wherein the sensor readings comprise dew-point readings.

## Claims

1. A system, comprising:
a first set of sensors, configured to provide given sensor readings to a wireless gateway at a first polling rate;
a second sensor, located proximate to cooling equipment, and configured to provide additional sensor readings to a computing device at a second polling rate; and
the computing device, configured to:
receive the given sensor readings from the wireless gateway;
receive the additional sensor readings from the second sensor;
execute an algorithm, using the given sensor readings and the additional sensor readings, wherein the execution of the algorithm comprises comparison of temperature, power, and time parameters; and
output, based on results of the executed algorithm, updated polling rates of at least one of the first set of sensors or the second sensor, wherein one or more of the updated polling rates is different from at least one of the first polling rate or the second polling rate.

2. The system of claim 1, wherein the computing device is further configured to:
determine that a given one of the first set of sensors or the second sensor has not transmitted a corresponding sensor reading within an expected timeframe;
provide an indication that a wireless data packet collision has occurred; and
adjust a corresponding polling rate of the given one of the first set of sensors or the second sensor.

3. The system of claim 1 or claim 2, wherein the computing device is further configured to:
determine that a given one of the first set of sensors or the second sensor has transmitted corresponding sensor readings that are within a given bounded range for a given passage of time; and
adjust a corresponding polling rate of the given one of the first set of sensors or the second sensor to a static polling rate.

4. The system of any preceding claim, wherein the given sensor readings or the additional sensor readings comprise temperature readings.

5. The system of any preceding claim, wherein the given sensor readings or the additional sensor readings comprise humidity readings.

6. The system of any preceding claim, wherein the given sensor readings or the additional sensor readings comprise dew-point readings.

7. The system of any preceding claim, wherein the first set of sensors are located proximate to respective racks of computing hardware within a data center environment.

8. A method, comprising:
receiving given sensor readings from a wireless gateway at a first polling rate, wherein a first set of sensors that transmit the given sensor readings are located proximate to respective racks of computing hardware within a data center environment;
receiving additional sensor readings from a second sensor at a second polling rate, wherein the second sensor that transmits the additional sensor readings is located proximate to cooling equipment within the data center environment;
executing an algorithm, using the given sensor readings and the additional sensor readings, wherein the executing the algorithm comprises comparing temperature, power, and time parameters; and
outputting, based on results of the executed algorithm, updated polling rates of at least one of the first set of sensors or the second sensor, wherein one or more of the updated polling rates is different from at least one of the first polling rate or the second polling rate.

9. The method of claim 8, further comprising:
determining that a given one of the first set of sensors or the second sensor has not transmitted a corresponding sensor reading within an expected timeframe; and
providing an indication that a wireless data packet collision has occurred.

10. The method of claim 8 or claim 9, further comprising:
determining that a given one of the first set of sensors or the second sensor has transmitted corresponding sensor readings that are within a given bounded range for a given passage of time; and
adjusting a corresponding polling rate of the given one of the first set of sensors or the second sensor to a static polling rate.

11. The method of any of claims 8-10, wherein the given sensor readings or the additional sensor readings comprise temperature readings.

12. The method of any of claims 8-11, wherein the given sensor readings or the additional sensor readings comprise humidity readings.

13. The method of any of claims 8-12, wherein the given sensor readings or the additional sensor readings comprise dew-point readings.
